# EUROPEAN PATENT APPLICATION

(11) **EP 4 674 665 A1**
(43) Date of publication of application: **07.01.2026**
(21) Application number: 24186896.7
(22) Date of filing: 05.07.2024
(51) Int. Cl.: B60L 1/00, B60L 1/02, B60L 3/00, B60L 3/04, B60L 3/12, B60L 58/12, B60L 58/25, H02J 7/00

(54) **HANDLING AN ELECTRICAL SYSTEM**

(71) Applicant: Volvo Construction Equipment AB, 631 85 Eskilstuna (SE)
(72) Inventor: Örkenrud, Kim, 352 64 Växjö (SE); Ekman, Gordon, 342 63 Moheda (SE); Kvist, Roland, 363 91 Braås (SE)
(74) Representative: Valea AB

(57) **Abstract**

A computer system (700) comprising processing circuitry (702) configured to handle an electrical system (100) comprising a battery arrangement (1) and a set of consumer units (12) is provided. Each consumer unit is configured to convert electric power to mechanical power and/or thermal power. The battery arrangement (1) comprises a set of battery packs (2) capable of supplying power to the set of consumer units (12). The processing circuitry (702) is configured to obtain an indication of a thermal hazard or a risk of a thermal hazard of at least one battery pack (3) of the set of battery packs (2) and in response, trigger the at least one battery pack (3) to discharge electric energy stored therein at least partly by powering at least one consumer unit (13) of the set of consumer units (12) with power supplied from the at least one battery pack (3).

## Description

### TECHNICAL FIELD

The disclosure relates generally to handling an electrical system. In particular aspects, the disclosure relates to triggering at least one battery pack to discharge electric energy stored therein in response to a thermal hazard or risk thereof. The disclosure can be applied to heavy-duty vehicles, such as trucks, buses, and construction equipment, among other vehicle types. Although the disclosure may be described with respect to a particular vehicle, the disclosure is not restricted to any particular vehicle. While mostly discussed with respect to vehicles, the disclosure is not limited to be used in vehicles.

### BACKGROUND

Battery packs are at risk of thermal runaway which may be caused by many different sources such as deformation of the battery packs, overcharging of the battery packs, or hazardous environment of the battery packs. As used herein, a "thermal runaway" relates to a condition in which a battery pack rapidly increases in temperature which can result in damage to the battery pack or any electrical machine assembly using a battery pack for power supply or energy storage. Hence, there is a strive to improve safety of battery packs.

### SUMMARY

According to a first aspect of the disclosure, a computer system comprising processing circuitry configured to handle an electrical system is provided. The electrical system comprises a battery arrangement and a set of consumer units. Each consumer unit in the set of consumer units is configured to convert electric power to mechanical power and/or thermal power. In other words, the set of consumer units may comprise any suitable electrically driven component such as a pump, a fan, a motor, a resistor, or other components possible to convert power. The battery arrangement comprises a set of battery packs capable of supplying power to the set of consumer units.

The processing circuitry is configured to obtain an indication of a thermal hazard or a risk of a thermal hazard of at least one battery pack of the set of battery packs.

The processing circuitry is further configured to, in response to obtaining the indication, trigger the at least one battery pack to discharge electric energy stored therein at least partly by powering at least one consumer unit of the set of consumer units with power supplied from the at least one battery pack.

The first aspect of the disclosure may seek to improve safety of battery packs.

A technical benefit may include avoidance of a thermal hazard or mitigation of effects of thermal hazard. A thermal hazard as used herein may mean a thermal runaway event. This is since when there is a thermal hazard or risk thereof in the at least one battery pack, electric energy stored therein is discharged by powering the at least one consumer unit. Since energy thereby can rapidly leave the at least one battery pack, thermal hazard may be mitigated or even avoided since the battery may not have sufficient remaining energy for a thermal hazard to emerge.

In some examples herein, the at least one consumer unit may comprise a consumer unit solely arranged for being able to consume power when there is a thermal hazard or risk thereof, and/or the at least one consumer unit may comprise one or more consumer units which may already consume power, but which may be triggered to consume more power for avoiding or mitigating risks of the thermal hazard.

Optionally in some examples, including in at least one preferred example, the processing circuitry is configured to obtain one or more state parameters of the electrical system, and to, in response to obtaining the indication, trigger the at least one battery pack to discharge electric energy stored therein based on the one or more state parameters. In these examples, the one or more parameters comprises any one or more of:
- usage of power, voltage, current, or a combination thereof, of the one or more consumer units,
- supply of power, voltage, current, or a combination thereof, by the at least one battery pack and/or the set of battery packs,
- a state of charge (SoC) of the at least one battery pack and/or the set of battery packs,
- environmental conditions of the at least one battery pack and/or the set of battery packs.

A technical benefit may include improved safety of battery packs. This is since the at least one battery pack can be discharged quicker and safer by considering the parameters of the electrical system.

Optionally in some examples, including in at least one preferred example, the processing circuitry is configured to, based on the one or more state parameters of the electrical system, select the at least one consumer unit from the set of consumer units to which the at least one battery pack should supply power for discharging electric energy stored therein.

A technical benefit may include improved safety of battery packs. This is since the at least one battery pack can be discharged quicker and safer by considering which of the set of consumer units may best e.g., quickest and/or accommodate the discharge of the at least one battery pack. Best in this context may be which at least one consumer unit may be quickest to use for discharging the at least one battery pack and/or which at least one consumer unit can accommodate most power and/or energy.

Optionally in some examples, including in at least one preferred example, the processing circuitry is configured to trigger the at least one battery pack to discharge electric energy stored therein by accounting for a predefined safety model of the electrical system. In these examples, the predefined safety model comprises at least one constraint for power consumption for the at least one consumer unit to which the at least one battery pack is triggered to discharge the electric energy stored therein.

A technical benefit may include improved safety of battery packs. This is since the power constraint for the at least one consumer unit may be met. For example, the power constraint may comprise how much power the at least one consumer unit may consume at maximum, or when the at least one consumer unit comprises multiple consumer units, the maximum power consumed by any respective consumer unit of the at least one consumer unit. In a corresponding manner, the power constraint may further comprise a maximum voltage and/or current of each respective consumer unit of the at least one consumer unit.

Optionally in some examples, including in at least one preferred example, the processing circuitry is configured to obtain an indication of an operating status of the set of battery packs, and to obtain the indication of the hazard or risk of hazard by detecting the hazard or risk of hazard of the at least one battery pack based on the operating status of the set of battery packs. In these examples, the operating status of the set of battery packs is indicative of any one or more of:
- an SoC of each battery pack and/or the set of battery packs,
- a temperature of each battery pack and/or the set of battery packs,
- a pressure associated with each battery pack and/or the set of battery packs,
- a mass of each battery pack and/or the set of battery packs,
- a sound of each battery pack and/or the set of battery packs,
- a gas measurement of each battery pack and/or the set of battery packs,
- a voltage and/or current supplied by each battery pack and/or the set of battery packs, or
- a combination of two or more of the above.

A technical benefit may include improved safety of battery packs. This is since each battery pack or the set of battery packs as a whole may be considered in the context of many different parameters, which may improve accuracy of detecting the hazard or risk thereof.

Optionally in some examples, including in at least one preferred example, the battery arrangement is comprised in a first electrical machine assembly. The at least one consumer unit comprises a consumer unit comprised in the first electrical machine assembly, The first electrical machine assembly is preferably a vehicle.

A technical benefit may include improved safety of battery packs. This is since the at least one battery pack may be discharged into consumer unit(s) of the same electrical machine assembly, i.e., the first electrical machine assembly may be arranged to comprise the at least one consumer unit which may be arranged to be used to dynamically be able to consume the power of the at least one battery pack as needed when there is a thermal hazard or risk thereof. When the first electrical machine assembly is a vehicle, the at least one consumer unit may for instance be an electric motor.

Optionally in some examples, including in at least one preferred example, the battery arrangement is comprised in a first electrical machine assembly. The at least one consumer unit comprises an external discharge unit located at least a minimum set distance from the first electrical machine assembly, preferably comprised in a second electrical machine assembly.

A technical benefit may include improved safety of battery packs. This is since the discharging of the at least one battery pack can be performed to the external discharge unit located at least the minimum set distance of the first electrical machine assembly. This means that heat dissipation of consuming said power is performed at the minimum distance, thereby improving safety as heat possibly produced by the at least one consumer unit will affect the set of battery packs to a limited extend, possibly not at all, and will therefore reduce the risk of thermal hazard.

Optionally in some examples, including in at least one preferred example, the external discharge unit comprises a motor, and wherein the processing circuitry is configured to trigger the at least one battery pack to discharge electric energy stored therein at least partly by powering said motor.

A technical benefit may include improved safety of battery packs. This is since the energy of the at least one battery pack is discharged to power said motor and hence, energy of the at least one battery pack which otherwise would have led to a thermal hazard can be rapidly consumed by powering said motor.

Optionally in some examples, including in at least one preferred example, the processing circuitry is configured to trigger an eddy current brake to brake said motor.

A technical benefit may include improved safety of battery packs. This is since the eddy current brake may further brake said motor while it is powered to further dissipate heat in a rapid manner. This will cause energy of the at least one battery pack to rapidly be converted into heat at the minimum distance thereby reducing risks of thermal hazard at the at least one battery pack.

Optionally in some examples, including in at least one preferred example, the processing circuitry is configured to in response to obtaining the indication, trigger a decoupling or disabling of one or more functional battery packs out of the set of battery packs. In these examples, the one or more functional battery packs are not indicated by the indication to have a hazard or risk of hazard.

A technical benefit may include improved safety of battery packs. This is since the at least one battery pack will be the only battery pack(s) which can provide power to the at least one consumer unit, and hence, discharge will be faster as power is not supplied by the one or more functional battery packs.

Optionally in some examples, including in at least one preferred example, the processing circuitry is configured to:
- identify a maximum electric power that can be supplied to the at least one consumer unit from the at least one battery pack, and
- trigger the at least one battery pack to discharge the maximum electric power from the at least one battery pack to the at least one consumer unit.

A technical benefit may include improved safety of battery packs. This is since the maximum electric power is not exceeded which will improve safety as exceeding the maximum electric power may lead to other hazards such as overheating, fire, etc. The maximum electric power in these examples may comprise a total maximum electric power for all consumer units of the at least one consumer units and/or may comprise respective individual maximum electric power for each respective consumer unit of the at least one consumer unit.

Optionally in some examples, including in at least one preferred example, the processing circuitry is configured to, in response to obtaining the indication, trigger the at least one battery pack to discharge electric energy stored therein at least partly by powering the at least one consumer unit with power supplied from the at least one battery pack until a state of charge of the at least one battery pack is 0% or until the state of charge of the at least one battery pack is equal to or below a predetermined minimum state of charge of the at least one battery pack.

A technical benefit may include improved safety of battery packs. This is since the

According to a second aspect of the disclosure, a first electrical machine assembly comprising an electrical system is provided. The electrical system comprises a battery arrangement and a set of consumer units. Each consumer unit in the set of consumer units is configured to convert electric power to mechanical power and/or thermal power. The battery arrangement comprises a set of battery packs capable of supplying power to the set of consumer units. The first electrical machine assembly further comprises and/or is controlled by the computer system according to the first aspect.

Optionally in some examples, including in at least one preferred example, the first electrical machine assembly is a vehicle.

Optionally in some examples, including in at least one preferred example, the at least one consumer unit comprises an external discharge unit located at least a minimum set distance from the first electrical machine assembly, preferably comprised in a second electrical machine assembly.

According to a third aspect of the disclosure, a computer-implemented method for handling an electrical system comprising a battery arrangement and a set of consumer units is provided. Each consumer unit in the set of consumer units is configured to convert electric power to mechanical power and/or thermal power. The battery arrangement comprises a set of battery packs capable of supplying power to the set of consumer units.

The method comprises, by processing circuitry of a computer system, obtaining an indication of a thermal hazard or a risk of a thermal hazard of at least one battery pack of the set of battery packs.

The method comprises, by the processing circuitry, in response to obtaining the indication, triggering the at least one battery pack to discharge electric energy stored therein at least partly by powering the at least one consumer unit of the set of consumer units with power supplied from the at least one battery pack.

Optionally in some examples, including in at least one preferred example, the method further comprises, by the processing circuitry, obtaining one or more state parameters of the electrical system, and wherein triggering the at least one battery pack to discharge electric energy stored therein is based on the one or more state parameters.

In these examples, the one or more parameters may comprise any one or more of:
- usage of power, voltage, current, or a combination thereof, of the one or more consumer units,
- supply of power, voltage, current, or a combination thereof, by the at least one battery pack and/or the set of battery packs,
- an SoC of the at least one battery pack and/or the set of battery packs,
- environmental conditions of the at least one battery pack and/or the set of battery packs.

Optionally in some examples, including in at least one preferred example, the method further comprises, by the processing circuitry, obtaining an indication of an operating status of the set of battery packs, and wherein obtaining the indication of the hazard or risk of hazard comprises detecting the hazard or risk of hazard of the at least one battery pack based on the operating status of the set of battery packs.

In these examples, the operating status of the set of battery packs is indicative of any one or more of:
- an SoC of each battery pack and/or the set of battery packs,
- a temperature of each battery pack and/or the set of battery packs,
- a pressure associated with each battery pack and/or the set of battery packs,
- a mass of each battery pack and/or the set of battery packs,
- a sound of each battery pack and/or the set of battery packs,
- a gas measurement of each battery pack and/or the set of battery packs,
- a voltage and/or current supplied by each battery pack and/or the set of battery packs, or
- a combination of two or more of the above.

Optionally in some examples, including in at least one preferred example, the method further comprises, by the processing circuitry, identifying a maximum electric power that can be supplied to the at least one consumer unit from the at least one battery pack. In these examples, the method further comprises, by the processing circuitry, triggering the at least one battery pack to discharge the maximum electric power from the at least one battery pack to the at least one consumer unit.

Technical benefits of the second and/or third aspects of the disclosure correspond to the technical benefits of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary electrical system according to an example.
**FIG. 2** illustrates an exemplary vehicle as a first electrical machine assembly and a second electrical machine assembly and according to an example.
**FIG. 3** illustrates an exemplary vehicle as a first electrical machine assembly and another exemplary vehicle as a second electrical machine assembly according to an example.
**FIG. 4** is a flow chart of an exemplary method according to an example.
**FIG. 5** is another view of **FIG. 1****,** according to an example.
**FIG. 6** is a flow chart of an exemplary method according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

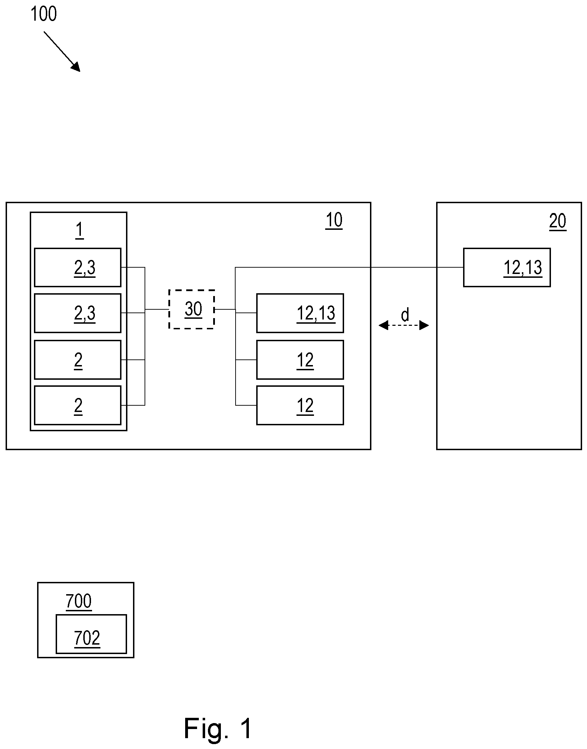

**FIG. 1** is an exemplary **electrical system 100** according to an example. The electrical system comprises a **battery arrangement 1** and a **set of consumer units 12.**

The battery arrangement 1 comprises a **set of battery packs 2** capable of supplying power to the set of consumer units 12.

Each consumer unit in the set of consumer units 12 is configured to convert electric power to mechanical power and/or thermal power. In other words, the set of consumer units 12 may comprise any suitable electrically driven component such as a pump, a fan, a motor, a resistor, or other components possible to convert power.

The battery arrangement 1 may be comprised in a **first electrical machine assembly 10** which may be any suitable electrical machine assembly, e.g., powered at least partly by the set of battery packs 2. The first electrical machine assembly 10 may preferably be a vehicle. In the examples where the first electrical machine assembly 10 is a vehicle, the vehicle may be any suitable vehicle, e.g., a car, a truck, a bus, a marine vessel, a heavy-duty vehicle, etc. In the examples where the first electrical machine assembly 10 is a vehicle, the vehicle may be an electrically driven vehicle powered by the set of battery packs 2.

Examples herein relate to detecting thermal hazard, e.g., thermal runaway, or risks thereof in **at least one battery pack 3** of the set of battery packs 2. Furthermore, examples herein relate to triggering the at least one battery pack 3 to discharge electric energy stored therein at least partly by powering **at least one consumer unit 13** of the set of consumer units 12 with power supplied from the at least one battery pack 3. In this way, thermal hazard or effects thereof is avoided or mitigated by transferring the energy into the at least one consumer unit which converts the energy into mechanical power and/or heat away from the at least one battery pack 3.

In examples herein, the at least one battery pack 3 may comprise a single battery pack, a subset of multiple battery packs of the set of battery packs 3, or all battery packs of the set of battery packs 2. In a corresponding manner, in examples herein, the at least one consumer unit 13 may comprise a single consumer unit, a subset of multiple consumer units of the set of consumer units 12, or all consumer units of the set of consumer units 12.

The set of consumer units 12 may be comprised in the first electrical machine assembly 10 or in any other suitable entity. The set of consumer units 12 may comprise one or multiple consumer units which may be comprised in the same entity, e.g., the first electrical machine assembly 10 or may be distributed over multiple locations such as to be comprised in a **second electrical machine assembly 20.** The second electrical machine assembly 20 may be any suitable machine such as a vehicle. For example, the set of consumer units 12 may comprise an external discharge unit located at least a minimum set **distance d** from the first electrical machine assembly 10, preferably comprised in the second electrical machine assembly 20. The distance d may be at least 1 meter. Since the external discharge unit is the distance d away from the first electrical machine assembly 10, heat can dissipate safely away from the battery arrangement 1, and thereby will not cause or effect any thermal hazards of the set of battery packs 2.

In some examples, the external discharge unit comprises a motor and discharging the energy from the at least one battery pack 3 may comprise powering the motor. Furthermore, the motor may be equipped with an eddy current brake, e.g., as part of or accompanied with the external discharge unit, which may be triggered to brake the motor to cause heat dissipation of the energy.

The set of battery packs 2 may be arranged to supply power to the set of consumer units 12, or to discharge energy from the at least one battery pack 3 to the at least one consumer unit 13 in any suitable manner. For example, a **junction box 30,** or any suitable control unit may be configured to be able to control how and/or which battery pack in the set of battery packs 2 powers the set of consumer units 12, e.g., by redirecting and/or controlling power.

Examples herein may be performed by a computer system 700 and/or a processing circuitry 702 therein. The computer system 700 and/or the processing circuitry 702 therein may be comprised in any suitable locations such as in the first electrical system 100, e.g., comprised in the first electrical machine assembly 10 or the second electrical machine assembly 20, or remote to the electrical system 100, e.g., as part of a server and/or cloud service.

The computer system 700 and/or the processing circuitry 702 therein may be communicatively and/or electrically connected to any suitable entity of examples herein.

The computer system 700 and/or the processing circuitry 702 therein may be capable of controlling how the set of battery packs 2 power the set of consumer units 12, e.g., by controlling how power is distributed to the set of consumer units 12 such as by issuing signals to a suitable control unit, e.g., the junction box 30.

The computer system 700 and/or the processing circuitry 702 therein may be or may comprise an Electronical Control Unit (ECU), e.g., as part of a vehicle control system when the first electrical machine assembly 10 is a vehicle.

The computer system 700 and/or the processing circuitry 702 therein may be part of and/or comprised in a Battery Management System (BMS) configured for monitoring and handling the battery arrangement 1. In examples herein, when a thermal hazard is detected in the at least one battery pack 3, the BMS may wish to rapidly transition to a safe state by essentially short circuiting the at least one battery pack 3 and to discharge electric energy stored therein to the at least one consumer unit 13. The target is to deplete the failing at least one battery pack 3 as fast as possible without jeopardizing anything else in the electrical system 100, or with limited damages to the electrical system 100.

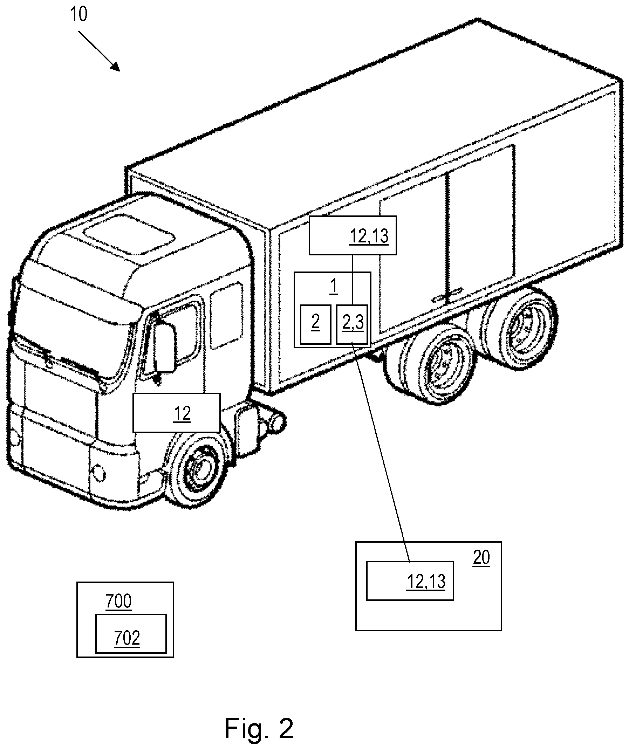

**FIG. 2** illustrates an example where the first electrical machine assembly 10 is a truck. The at least one battery 3 may be discharged by powering the at least one consumer unit 13, in this example one consumer unit comprised in the first electrical machine assembly 10, and one consumer unit in the second electrical machine assembly 20.

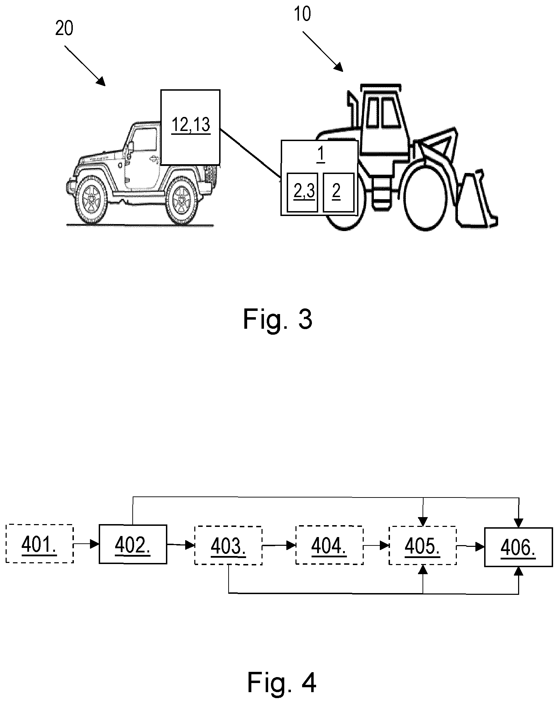

**FIG. 3** illustrates an example where the first electrical machine assembly 10 and the second electrical machine assembly 20 are vehicles. The second electrical machine assembly 20 may be used at least partly as a location where energy may be discharged when thermal hazard or risk thereof is detected. For example, when a thermal runaway is detected in at least one battery pack 3 of the battery arrangement 1 in the first electrical machine assembly 10, the energy in the at least one battery pack 3 may be discharged to the at least one consumer unit 13 of the second electrical machine assembly 20, e.g., by powering a motor of the second electrical machine assembly 20 and optionally triggering an eddy current brake to brake the motor for dissipating heat and thereby consuming energy from the at least one battery pack 3 quick and thereby reducing risks or effects of the thermal hazard. To this end, the computer system 700 and/or a processing circuitry 702 therein may be adapted to issue control information to the second electrical machine assembly 20 as well as to the first electrical machine assembly 10 such that the energy in the at least one battery pack 3 can be discharged to the at least one consumer unit 13 of the second electrical machine assembly 20. Purely by way of example, the computer system 700 and/or a processing circuitry 702 therein may be adapted to issue the issue control information to the second electrical machine assembly 20 via a wire (not shown) or via a wireless system. Moreover, as indicated in FIG. 3, the first electrical machine assembly 10 and the second electrical machine assembly 20 may be connected to each other via a power cable or the like in order to enable the transfer of electric energy from the at least one battery pack 3 to the at least one consumer unit 13 of the second electrical machine assembly 20.

**FIG. 4** is a flow chart of an exemplary computer-implemented method for handling the electrical system 100 according to an example. The electrical system 100 comprises a battery arrangement 1 and a set of consumer units 12. Each consumer unit in the set of consumer units 12 is configured to convert electric power to mechanical power and/or thermal power. The battery arrangement 1 comprises a set of battery packs 2 capable of supplying power to the set of consumer units 12. The method comprises the following actions which may be performed in any suitable order, e.g., the order presented below. Dashed boxes in FIG. 4 may indicate optional actions. The computer system 700 and/or the processing circuitry therein may be configured to perform the following actions, i.e., the method may be arranged to be performed by the computer system 700 or the processing circuitry 702 therein.

In some examples, the battery arrangement 1 is comprised in the first electrical machine assembly 10. The first electrical machine assembly 10 is preferably a vehicle.

### Action 401

In some examples, the method may comprise, obtaining an indication of an operating status of the set of battery packs 2. The indication may be obtained using sensors, e.g., by receiving sensor data of the set of battery packs or its environment. The operating status may be indicative of any suitable parameter that may be used independently or jointly with other parameters for detecting a thermal hazard or risk thereof in the set of battery packs 2. For example, the operating status of the set of battery packs 2 may be indicative of any one or more of:
- a State of Charge, SoC, of each battery pack and/or the set of battery packs 2,
- a temperature of each battery pack and/or the set of battery packs 2,
- a pressure associated with each battery pack and/or the set of battery packs 2,
- a mass of each battery pack and/or the set of battery packs 2,
- a sound of each battery pack and/or the set of battery packs 2,
- a gas measurement of each battery pack and/or the set of battery packs 2,
- a voltage and/or current supplied by each battery pack and/or the set of battery packs 2, or
- a combination of two or more of the above.

### Action 402

The method comprises obtaining an indication of a thermal hazard or a risk of a thermal hazard of the at least one battery pack 3 of the set of battery packs 2. The indication may be obtained as received by signals from sensors, input, or by any suitable detection mechanism. For examples, obtaining the indication of the hazard or risk of hazard may comprise detecting the hazard or risk of hazard of the at least one battery pack 3 based on the operating status of the set of battery packs 2. Detection based on the operating status may be performed based on predefined heuristics and/or based on any suitable trained statistical model such as by using a machine learning model for detecting the thermal hazard or risk thereof by using the operating status as input. In these examples the machine learning model may have been trained on training data indicative of corresponding parameters as in the operating status for battery packs with thermal hazards and optionally healthy battery packs.

### Action 403

In some examples, the method may comprise, obtaining one or more state parameters of the electrical system 100.

The one or more state parameters may be indicative of any suitable aspect of the electrical system 100.

The one or more state parameters comprises any one or more of:
- usage of power, voltage, current, or a combination thereof, of the one or more consumer units 12,
- supply of power, voltage, current, or a combination thereof, by the at least one battery pack 3 and/or the set of battery packs 2,
- a state of charge, SoC of the at least one battery pack 3 and/or the set of battery packs 2,
- environmental conditions of the at least one battery pack 3 and/or the set of battery packs 2.

In other words, the one or more state parameters may for example be indicative of how the set of consumer units 12 are capable of consuming power, e.g., individually or collectively, and/or how the set of battery packs 2 may be capable of providing power, e.g., individually or collectively.

### Action 404

In some examples, the method may comprise, based on the one or more state parameters of the electrical system 100, selecting the at least one consumer unit 13 from the set of consumer units 12 to which the at least one battery pack 3 should supply power for discharging electric energy stored therein.

If not selected as in this example action, the at least one consumer unit 13 may instead be predefined and/or may comprise all of the set of consumer unis 12.

In some examples, the at least one consumer unit 13 comprises a consumer unit comprised in the first electrical machine assembly 10.

In some examples, the at least one consumer unit 13 comprises an external discharge unit located at least the minimum set distance d from the first electrical machine assembly 10, preferably comprised in the second electrical machine assembly 20.

In other words, the at least one consumer unit 13 may comprise internal and/or external discharge units for consuming power to reduce or mitigate risk and/or effect of thermal hazard in the at least one battery pack 3.

### Action 405

In some examples, the method may comprise, identifying a maximum electric power that can be supplied to the at least one consumer unit 13 from the at least one battery pack 3. Identifying the maximum electric power may comprise identifying the maximum electric power that can be supplied to the at least one consumer unit 13 as a collective, e.g., total maximum electric power and/or identifying the maximum electric power that can be supplied to each respective consumer unit of the at least one consumer unit 13.

The maximum electric power that can be supplied to the at least one consumer unit 13 from the at least one battery pack 3 may be based on the supplying capacity of the at least one battery pack 3 and/or the capability of the at least one consumer unit 13 and/or associated safety threshold for how much power can be consumed before risk of overheating etc.

In some examples, the maximum electric power is predefined, e.g., as part of an initial configuration on maximum electric power each of the respective consumer units of the set of consumer units 12 can be powered, and optionally for how long the maximum electric power can be used, without risking overheating and/or damaging the respective consumer unit.

Identifying the maximum electric power that can be supplied to the at least one consumer unit 13 may be obtained using predefined heuristics and/or a predefined identifying model using the one or more state parameters of the electrical system 100 as input. The predefined identifying model may account for safety with regards to how power can be discharged from the at least one battery pack 3 to the at least one consumer unit 13.

Identifying the maximum electric power may further be performed as part of action 404 such that the at least one consumer unit 13 may be selected based on the identifies maximum electric power. For example, the at least one consumer unit 13 may be selected as it comprises the one or more consumer units 13 which may be able to consume the most power and/or may be able to consume the power needed to be discharged by the at least one battery pack 3.

### Action 406

The method comprises, in response to obtaining the indication of the thermal hazard or risk thereof, e.g., as in action 402, triggering the at least one battery pack 3 to discharge electric energy stored therein at least partly by powering at least one consumer unit 13 of the set of consumer units 12 with power supplied from the at least one battery pack 3. Triggering the at least one battery pack 3 to discharge electric energy stored therein at least partly by powering at least one consumer unit 13 may be performed by any suitable means such as by signaling a control unit and/or the junction box 30 to control the power between the set of battery packs 2 and the set of consumer units 12 such that the at least one battery pack 3 is powering the at least on consumer unit 13.

In some examples, triggering the at least one battery pack 3 to discharge electric energy stored therein may be based on the one or more state parameters. For example power constraints in the electrical system 100 may be accounted for with respect to the one or more state parameters such that the at least one battery 3 can be rapidly and safely discharged. The power constraints may be predefined or obtained in any suitable manner.

In other words, in some examples, triggering the at least one battery pack 3 to discharge electric energy stored therein may comprise triggering the at least one battery pack 3 to discharge electric energy stored therein by accounting for a predefined safety model of the electrical system 100. The predefined safety model may be any suitable model which accounts for how power can be distributed in the electrical system 100 and accounting for other safety protocols or hazards other than the thermal hazard. For example, the predefined safety model may indicate how much power can be increased in the at least one consumer unit 13 without risking overheating or damaging the at least one consumer unit 13.

The predefined safety model may comprise at least one constraint for power consumption for the at least one consumer unit 13. The constraint may indicate maximum total power consumption allowed for the at least one consumer unit 13 and/or respective maximum power consumption per respective unit in the at least one consumer unit 13, e.g., as predefined or as identified to be the maximum electric power as in action 402. The at least one constraint for power consumption may further comprise constraints for voltage, current, or energy consumption over a set time period, or any suitable constraint which may cause any hazard or other problem in the electrical system 100.

Triggering the at least one battery pack 3 to discharge the maximum electric power, from the at least one battery pack 3 to the at least one consumer unit 13. The maximum electric power may be the power identified above in action 405 or as part of the at least one constraint.

In some examples, when the at least one consumer unit 13 comprises an external discharge unit, the external discharge unit may comprise a motor. In these examples, triggering the at least one battery pack 3 to discharge electric energy stored therein may comprise triggering the at least one battery pack 3 to discharge electric energy stored therein at least partly by powering the motor. In some further examples, triggering the at least one battery pack 3 to discharge electric energy stored therein may further comprise triggering an eddy current brake to brake the motor.

When the external discharge unit is operated, the electric motor may be arranged to spin up and the energy is transferred into heat by the eddy current brake. The heat may then be vented away at a safe distance from the at least one battery pack 3.

The first electrical machine assembly 10 comprising the at least one battery pack 3 may need to be configured in such a way that it is possible to discharge electric power to the external discharge unit, e.g., there may need to be, besides electrical coupling for discharging power, a communication connection, wired or wireless, between the first electrical machine assembly 10 and the external discharge unit, or between the first electrical machine assembly 10 and the second electrical machine assembly 20 when the external discharge unit is comprised therein. The communication connection may be part of a standard charging connection, or may be a separate connection meant for the purpose. The external discharge unit may include an inverter if the electric motor is of an AC configuration. In examples herein, the eddy current brake may be substituted with any other device for similar purpose, e.g., it may be a generator, a resistor, or a fluid brake. The complete motor and brake unit pair may also be replaced with a battery.

In some examples, triggering the at least one battery pack 3 to discharge electric energy stored therein may comprise a decoupling or disabling of one or more functional battery packs out of the set of battery packs 2. This may be performed by any suitable means such as by signaling a control unit and/or the junction box 30 to decouple or disable the one or more functional battery packs. In these examples the one or more functional battery packs may not be indicated by the indication of action 402 to have a hazard or risk of hazard.

In some examples, triggering the at least one battery pack 3 to discharge electric energy stored therein may comprise triggering the at least one battery pack 3 to discharge electric energy stored therein at least partly by powering the at least one consumer unit 13 with power supplied from the at least one battery pack 3 until a state of charge of the at least one battery pack 3 is 0% or until the state of charge of the at least one battery pack is equal to or below a predetermined minimum state of charge of the at least one battery pack, e.g., 10% or 20% but may depend on the type of the at least one battery pack. This is since a battery pack with thermal hazard or risk thereof is likely to be damaged and may need to be replaced or disabled, hence, it may be necessary to deplete at least a substantial amount, preferably all, SoC of the at least one battery pack 3. Furthermore, any remaining energy can potentially serve as a hazard and if the at least one battery pack is damaged it is best to deplete its charge.

In some examples, triggering the at least one battery pack 3 to discharge electric energy stored therein may comprise accounting for which damages to the electrical system 100 may be possible to risk in exchange for more rapidly discharging the at least one battery pack 3.

In some examples, triggering the at least one battery pack 3 to discharge electric energy stored therein may comprise discharging the energy with a maximum possible current possible to provide by the at least one battery pack 3.

In some examples, triggering the at least one battery pack 3 to discharge electric energy stored therein may comprise monitoring the electrical system 100 such that all entities therein are safe and not above respective safe temperatures. Current used for discharging the energy of the at least one battery pack 3 may be adjusted based on temperature monitored for any one or more electrical components in the electrical system 100.

In some examples, triggering the at least one battery pack 3 to discharge electric energy stored therein may comprise, in addition to discharging to the at least one consumer unit 13, additionally discharge to one or more battery packs of the set of battery packs 2 which are not associated with the thermal hazard or risk thereof.

In some examples, triggering the at least one battery pack 3 to discharge electric energy stored therein may comprise monitoring and controlling the electrical system 100, e.g., by the junction box 30, with regards to any one or more of: voltage, current, state of charge, temperature, operating of cooling systems and any other components or means to discharge the energy of the at least one battery pack 3, typically according to a predefined model to, in an optimal or suitable manner to get to a safe state condition for the at least one battery pack 3.

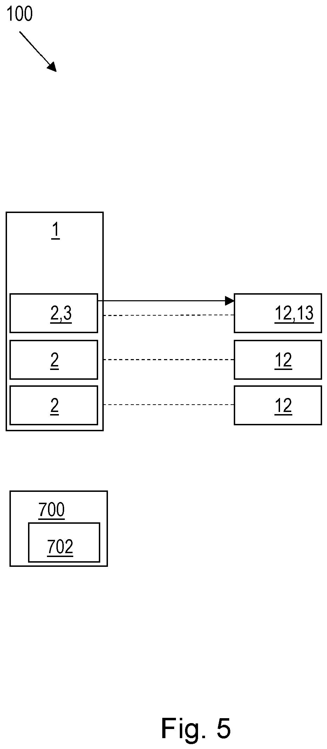

**FIG. 5** is another view of **FIG. 1****,** according to an example.

According to the example of **FIG. 5****,** the computer system 700 comprising the processing circuitry 702 configured to handle the electrical system 100 comprising the battery arrangement 1 and the set of consumer units 12 is provided. Each consumer unit in the set of consumer units 12 is configured to convert electric power to mechanical power and/or thermal power. The battery arrangement 1 comprises a set of battery packs 2 capable of supplying power to the set of consumer units 12.

The processing circuitry 702 is configured to obtain an indication of a thermal hazard or a risk of a thermal hazard of at least one battery pack 3 of the set of battery packs 2. The processing circuitry 702 is configured to, in response to obtaining the indication, trigger the at least one battery pack 3 to discharge electric energy stored therein at least partly by powering at least one consumer unit 13 of the set of consumer units 12 with power supplied from the at least one battery pack 3.

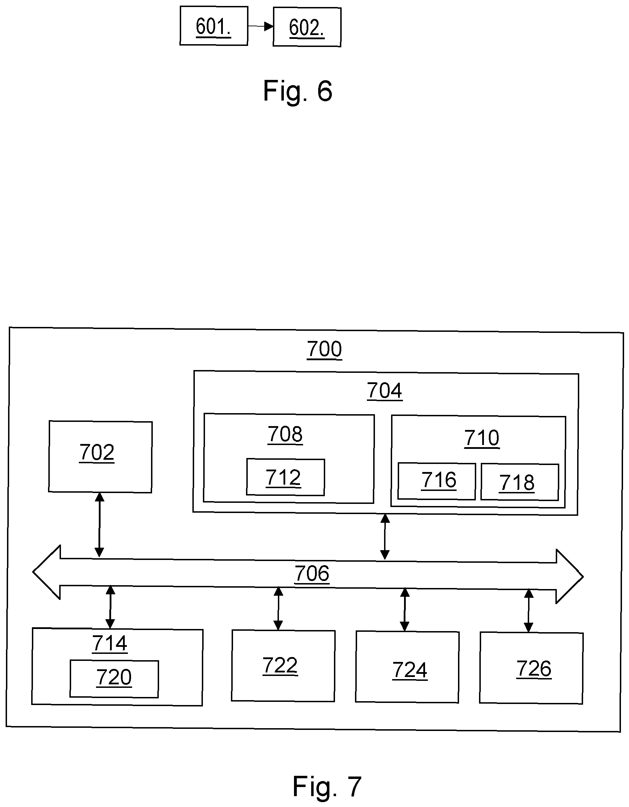

**FIG. 6** is a flow chart of an exemplary computer-implemented method for handling the electrical system 100 comprising the battery arrangement 1 and the set of consumer units 12. Each consumer unit in the set of consumer units 12 are configured to convert electric power to mechanical power and/or thermal power. The battery arrangement 1 comprises the set of battery packs 2 capable of supplying power to the set of consumer units 12. The method may be combined with any other example(s) above or below in any suitable manner. The method comprises the following actions 601-602.

### Action 601

The method comprises, by the processing circuitry 702 of the computer system 700, obtaining an indication of a thermal hazard or a risk of a thermal hazard of at least one battery pack 3 of the set of battery packs 2.

### Action 602

The method comprises, by the processing circuitry 702, in response to obtaining the indication, triggering the at least one battery pack 3 to discharge electric energy stored therein at least partly by powering at least one consumer unit 13 of the set of consumer units 12 with power supplied from the at least one battery pack 3.

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples 1-20 which may be combined with any of the above-mentioned examples or with the attached claims, in any suitable manner.
Example 1. A computer system 700 comprising processing circuitry 702 configured to handle an electrical system 100 comprising a battery arrangement 1 and a set of consumer units 12, each consumer unit in the set of consumer units 12 being configured to convert electric power to mechanical power and/or thermal power, the battery arrangement 1 comprising a set of battery packs 2 capable of supplying power to the set of consumer units 12, the processing circuitry 702 is configured to:
   - obtain an indication of a thermal hazard or a risk of a thermal hazard of at least one battery pack 3 of the set of battery packs 2,
   - in response to obtaining the indication, trigger the at least one battery pack 3 to discharge electric energy stored therein at least partly by powering at least one consumer unit 13 of the set of consumer units 12 with power supplied from the at least one battery pack 3.
Example 2. The computer system 700 of Example 1, wherein the processing circuitry 702 is configured to obtain one or more state parameters of the electrical system 100, and to, in response to obtaining the indication, trigger the at least one battery pack 3 to discharge electric energy stored therein based on the one or more state parameters, wherein the one or more parameters comprises any one or more of:
   - usage of power, voltage, current, or a combination thereof, of the one or more consumer units,
   - supply of power, voltage, current, or a combination thereof, by the at least one battery pack 3 and/or the set of battery packs 2,
   - a state of charge, SoC of the at least one battery pack 3 and/or the set of battery packs 2,
   - environmental conditions of the at least one battery pack 3 and/or the set of battery packs 2.
Example 3. The computer system 700 of Examples 2, wherein the processing circuitry 702 is configured to, based on the one or more state parameters of the electrical system 100, select the at least one consumer unit 13 from the set of consumer units 12 to which the at least one battery pack 3 should supply power for discharging electric energy stored therein.
Example 4. The computer system 700 of any of Examples 1-3, wherein the processing circuitry 702 is configured to trigger the at least one battery pack 3 to discharge electric energy stored therein by accounting for a predefined safety model of the electrical system 100, and wherein the predefined safety model comprises at least one constraint for power consumption for the at least one consumer unit 13 to which the at least one battery pack 3 is triggered to discharge the electric energy stored therein..
Example 5. The computer system 700 of any of Examples 1-4, wherein the processing circuitry 702 is configured to
   - obtain an indication of an operating status of the set of battery packs 2, and to obtain the indication of the hazard or risk of hazard by detecting the hazard or risk of hazard of the at least one battery pack 3 based on the operating status of the set of battery packs 2, wherein the operating status of the set of battery packs 2 is indicative of any one or more of:
      ∘ a State of Charge, SoC, of each battery pack and/or the set of battery packs 2,
      ∘ a temperature of each battery pack and/or the set of battery packs 2,
      ∘ a pressure associated with each battery pack and/or the set of battery packs 2,
      ∘ a mass of each battery pack and/or the set of battery packs 2,
      ∘ a sound of each battery pack and/or the set of battery packs 2,
      ∘ a gas measurement of each battery pack and/or the set of battery packs 2,
      ∘ a voltage and/or current supplied by each battery pack and/or the set of battery packs 2, or
      ∘ a combination of two or more of the above.
Example 6. The computer system of any of Examples 1-5, wherein the battery arrangement 1 is comprised in a first electrical machine assembly 10, and wherein the at least one consumer unit 13 comprises a consumer unit comprised in the first electrical machine assembly 10, wherein the first electrical machine assembly 10 is preferably a vehicle.
Example 7. The computer system of any of Examples 1-6, wherein the battery arrangement 1 is comprised in a first electrical machine assembly 10, and wherein the at least one consumer unit 13 comprises an external discharge unit located at least a minimum set distance d from the first electrical machine assembly 10, preferably comprised in a second electrical machine assembly 20.
Example 8. The computer system 700 of Example 7, wherein the external discharge unit comprises a motor, and wherein the processing circuitry 702 is configured to trigger the at least one battery pack 3 to discharge electric energy stored therein at least partly by powering said motor.
Example 9. The computer system 700 of Example 8 wherein the processing circuitry 702 is configured to trigger an eddy current brake to brake said motor.
Example 10. The computer system 700 of any of Examples 1-9 wherein the processing circuitry 702 is configured to in response to obtaining the indication, trigger a decoupling or disabling of one or more functional battery packs out of the set of battery packs 2, which one or more functional battery packs are not indicated by the indication to have a hazard or risk of hazard.
Example 11. The computer system 700 of any of Examples 1-10 wherein the processing circuitry 702 is configured to:
   - identify a maximum electric power that can be supplied to the at least one consumer unit 13 from the at least one battery pack 3, and
   - trigger the at least one battery pack 3 to discharge the maximum electric power from the at least one battery pack 3 to the at least one consumer unit 13.
Example 12. The computer system 700 of any of Examples 1-11 wherein the processing circuitry 702 is configured to:
   - in response to obtaining the indication, trigger the at least one battery pack 3 to discharge electric energy stored therein at least partly by powering the at least one consumer unit 13 with power supplied from the at least one battery pack 3 until a state of charge of the at least one battery pack 3 is 0% or within an error margin range of 0% of a maximum state of charge of the at least one battery pack 3.
Example 13. A first electrical machine assembly 10 comprising an electrical system 100 which comprises a battery arrangement 1 and a set of consumer units 12, each consumer unit in the set of consumer units 12 being configured to convert electric power to mechanical power and/or thermal power, the battery arrangement 1 comprising a set of battery packs 2 capable of supplying power to the set of consumer units 12, the first electrical machine assembly 10 further comprising and/or being controlled by the computer system 700 according to any of Examples 1-13.
Example 14. The first electrical machine assembly 10 of Example 13, wherein the first electrical machine assembly 10 is a vehicle.
Example 15. The first electrical machine assembly 10 of Example 13 or 14, wherein the at least one consumer unit 13 comprises an external discharge unit located at least a minimum set distance d from the first electrical machine assembly 10, preferably comprised in a second electrical machine assembly 20.
Example 16. A computer-implemented method for handling an electrical system 100 comprising a battery arrangement 1 and a set of consumer units 12, each consumer unit in the set of consumer units 12 being configured to convert electric power to mechanical power and/or thermal power, the battery arrangement 1 comprising a set of battery packs 2 capable of supplying power to the set of consumer units 12, the method further comprising:
   - by processing circuitry 702 of a computer system 700, obtaining 402, 601 an indication of a thermal hazard or a risk of a thermal hazard of at least one battery pack 3 of the set of battery packs 2, and
   - by the processing circuitry 702, in response to obtaining the indication, triggering 406, 602 the at least one battery pack 3 to discharge electric energy stored therein at least partly by powering at least one consumer unit 13 of the set of consumer units 12 with power supplied from the at least one battery pack 3.
Example 17. The method of Example 16 further comprising any one or more out of:
   - by the processing circuitry 702, obtaining 403 one or more state parameters of the electrical system 100, and wherein triggering 406 the at least one battery pack 3 to discharge electric energy stored therein is based on the one or more state parameters, wherein the one or more parameters comprises any one or more of:
      ∘ usage of power, voltage, current, or a combination thereof, of the one or more consumer units,
      ∘ supply of power, voltage, current, or a combination thereof, by the at least one battery pack 3 and/or the set of battery packs 2,
      ∘ a state of charge, SoC of the at least one battery pack 3 and/or the set of battery packs 2,
      ∘ environmental conditions of the at least one battery pack 3 and/or the set of battery packs 2; and/or
   - by the processing circuitry 702, obtaining 401 an indication of an operating status of the set of battery packs 2, and wherein obtaining 402 the indication of the hazard or risk of hazard comprises detecting the hazard or risk of hazard of the at least one battery pack 3 based on the operating status of the set of battery packs 2, wherein the operating status of the set of battery packs 2 is indicative of any one or more of:
      ∘ a State of Charge, SoC, of each battery pack and/or the set of battery packs 2,
      ∘ a temperature of each battery pack and/or the set of battery packs 2,
      ∘ a pressure associated with each battery pack and/or the set of battery packs 2,
      ∘ a mass of each battery pack and/or the set of battery packs 2,
      ∘ a sound of each battery pack and/or the set of battery packs 2,
      ∘ a gas measurement of each battery pack and/or the set of battery packs 2,
      ∘ a voltage and/or current supplied by each battery pack and/or the set of battery packs 2, or
      ∘ a combination two or more of the above six items.
Example 18. The method of Example 16 or 17 further comprising:
   - by the processing circuitry 702, identifying 405 a maximum electric power that can be supplied to the at least one consumer unit 13 from the at least one battery pack 3, and
   - by the processing circuitry 702, triggering 406 the at least one battery pack 3 to discharge the maximum electric power from the at least one battery pack 3 to the at least one consumer unit 13.
Example 19. A computer program product comprising program code for performing, when executed by the processing circuitry 702, the method of any of Examples 16-18.
Example 20. A non-transitory computer-readable storage medium comprising instructions, which when executed by the processing circuitry 702, cause the processing circuitry 702 to perform the method of any of Examples 16-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) comprising processing circuitry (702) configured to handle an electrical system (100) comprising a battery arrangement (1) and a set of consumer units (12), each consumer unit in the set of consumer units (12) being configured to convert electric power to mechanical power and/or thermal power, the battery arrangement (1) comprising a set of battery packs (2) capable of supplying power to the set of consumer units (12), the processing circuitry (702) is configured to:
- obtain an indication of a thermal hazard or a risk of a thermal hazard of at least one battery pack (3) of the set of battery packs (2),
- in response to obtaining the indication, trigger the at least one battery pack (3) to discharge electric energy stored therein at least partly by powering at least one consumer unit (13) of the set of consumer units (12) with power supplied from the at least one battery pack (3).

2. The computer system (700) of claim 1, wherein the processing circuitry (702) is configured to obtain one or more state parameters of the electrical system (100), and to, in response to obtaining the indication, trigger the at least one battery pack (3) to discharge electric energy stored therein based on the one or more state parameters, wherein the one or more parameters comprises any one or more of:
- usage of power, voltage, current, or a combination thereof, of the one or more consumer units,
- supply of power, voltage, current, or a combination thereof, by the at least one battery pack (3) and/or the set of battery packs (2),
- a state of charge, SoC of the at least one battery pack (3) and/or the set of battery packs (2),
- environmental conditions of the at least one battery pack (3) and/or the set of battery packs (2).

3. The computer system (700) of claims 2, wherein the processing circuitry (702) is configured to, based on the one or more state parameters of the electrical system (100), select the at least one consumer unit (13) from the set of consumer units (12) to which the at least one battery pack (3) should supply power for discharging electric energy stored therein.

4. The computer system (700) of any of claims 1-3, wherein the processing circuitry (702) is configured to trigger the at least one battery pack (3) to discharge electric energy stored therein by accounting for a predefined safety model of the electrical system (100), and wherein the predefined safety model comprises at least one constraint for power consumption for the at least one consumer unit (13) to which the at least one battery pack (3) is triggered to discharge the electric energy stored therein.

5. The computer system (700) of any of claims 1-4, wherein the processing circuitry (702) is configured to
- obtain an indication of an operating status of the set of battery packs (2), and to obtain the indication of the hazard or risk of hazard by detecting the hazard or risk of hazard of the at least one battery pack (3) based on the operating status of the set of battery packs (2), wherein the operating status of the set of battery packs (2) is indicative of any one or more of:
∘ a State of Charge, SoC, of each battery pack (3) and/or the set of battery packs (2),
∘ a temperature of each battery pack (3) and/or the set of battery packs (2),
∘ a pressure associated with each battery pack (3) and/or the set of battery packs (2),
∘ a mass of each battery pack (3) and/or the set of battery packs (2),
∘ a sound of each battery pack (3) and/or the set of battery packs (2),
∘ a gas measurement of each battery pack (3) and/or the set of battery packs (2),
∘ a voltage and/or current supplied by each battery pack (3) and/or the set of battery packs (2), or
∘ a combination of two or more of the above.

6. The computer system of any of claims 1-5, wherein the battery arrangement (1) is comprised in a first electrical machine assembly (10), and wherein the at least one consumer unit (13) comprises a consumer unit comprised in the first electrical machine assembly (10), wherein the first electrical machine assembly (10) is preferably a vehicle.

7. The computer system of any of claims 1-6, wherein the battery arrangement (1) is comprised in a first electrical machine assembly (10), and wherein the at least one consumer unit (13) comprises an external discharge unit located at least a minimum set distance (d) from the first electrical machine assembly (10), preferably comprised in a second electrical machine assembly (20).

8. The computer system (700) of claim 7, wherein the external discharge unit comprises a motor, and wherein the processing circuitry (702) is configured to trigger the at least one battery pack (3) to discharge electric energy stored therein at least partly by powering said motor, and preferably wherein the processing circuitry (702) is configured to trigger an eddy current brake to brake said motor.

9. The computer system (700) of any of claims 1-8 wherein the processing circuitry (702) is configured to in response to obtaining the indication, trigger a decoupling or disabling of one or more functional battery packs out of the set of battery packs (2), which one or more functional battery packs are not indicated by the indication to have a hazard or risk of hazard.

10. The computer system (700) of any of claims 1-9 wherein the processing circuitry (702) is configured to:
- identify a maximum electric power that can be supplied to the at least one consumer unit (13) from the at least one battery pack (3), and
- trigger the at least one battery pack (3) to discharge the maximum electric power from the at least one battery pack (3) to the at least one consumer unit (13).

11. The computer system (700) of any of claims 1-10 wherein the processing circuitry (702) is configured to:
- in response to obtaining the indication, trigger the at least one battery pack (3) to discharge electric energy stored therein at least partly by powering the at least one consumer unit (13) with power supplied from the at least one battery pack (3) until a state of charge of the at least one battery pack (3) is 0% or until the state of charge of the at least one battery pack (3) is equal to or below a predetermined minimum state of charge of the at least one battery pack (3).

12. A first electrical machine assembly (10) comprising an electrical system (100) which comprises a battery arrangement (1) and a set of consumer units (12), each consumer unit in the set of consumer units (12) being configured to convert electric power to mechanical power and/or thermal power, the battery arrangement (1) comprising a set of battery packs (2) capable of supplying power to the set of consumer units (12), the first electrical machine assembly (10) further comprising and/or being controlled by the computer system (700) according to any of claims 1-11, preferably where in the first electrical machine assembly (10) is a vehicle.

13. A computer-implemented method for handling an electrical system (100) comprising a battery arrangement (1) and a set of consumer units (12), each consumer unit in the set of consumer units (12) being configured to convert electric power to mechanical power and/or thermal power, the battery arrangement (1) comprising a set of battery packs (2) capable of supplying power to the set of consumer units (12), the method further comprising:
- by processing circuitry (702) of a computer system (700), obtaining (402, 601) an indication of a thermal hazard or a risk of a thermal hazard of at least one battery pack (3) of the set of battery packs (2), and
- by the processing circuitry (702), in response to obtaining the indication, triggering (406, 602) the at least one battery pack (3) to discharge electric energy stored therein at least partly by powering at least one consumer unit (13) of the set of consumer units (12) with power supplied from the at least one battery pack (3).

14. A computer program product comprising program code for performing, when executed by the processing circuitry (702), the method of claim 13.

15. A non-transitory computer-readable storage medium comprising instructions, which when executed by the processing circuitry (702), cause the processing circuitry (702) to perform the method of claim 13.
